**Europäisches Patentamt**

**European Patent Office**

**Office européen des brevets**

(11) Publication number: **0 105 828**
**B1**

(12) **EUROPEAN PATENT SPECIFICATION**

(45) Date of publication of patent specification: **02.03.88**

(21) Application number: **83630164.8**

(22) Date of filing: **03.10.83**

(51) Int. Cl.⁴: **F 02 D 21/08**

(54) **Method and apparatus for controlling diesel engine exhaust gas recirculation partly as a function of exhaust particulate level.**

(30) Priority: **04.10.82 US 432500**

(43) Date of publication of application:
**18.04.84 Bulletin 84/16**

(45) Publication of the grant of the patent:
**02.03.88 Bulletin 88/09**

(84) Designated Contracting States:
**AT DE FR GB IT NL SE**

(56) References cited:
**DE-A-2 911 209**
**GB-A-2 002 548**
**US-A-3 744 461**
**US-A-4 164 206**
**US-A-4 186 701**
**US-A-4 333 440**

**MOTORTECHNISCHE ZEITSCHRIFT, vol. 33, no. 2, February 1972, pages 35-40, Franckh'sche Verlagshandlung, Stuttgart, DE; M. FORTNAGEL: "Beeinflussung der Abgaszusammensetzung durch Abgasrückführung bei einem aufgeladenen Wirbelkammer-Dieselmotor"**

(73) Proprietor: **AIL CORPORATION**
**77 Kilian Road**
**Columbia South Carolina 29203 (US)**

(72) Inventor: **Kimberly, John Arthur**
**68 Newgate Road**
**East Granby Connecticut 06026 (US)**
Inventor: **Bullis, Robert Howard**
**14 Stony Corners**
**Avon Connecticut 06001 (US)**

(74) Representative: **Waxweiler, Jean et al**
**OFFICE DENNEMEYER S.à.r.l. P.O. Box 1502**
**L-1015 Luxembourg (LU)**

Courier Press, Leamington Spa, England.

## Description

The invention relates to a method and apparatus for controlling the recirculation of exhaust gas in a compression ignition, or diesel, engine, and more particularly relates to an improvement in such controls.

Exhaust gas recirculation (hereinafter EGR) is used in automobile diesel engines to control the emission of oxides of nitrogen (hereinafter $NO_x$). In many instances, the amount of EGR applied to the engine is controlled or scheduled as a function of the induced air quantity entering the engine. While such an approach is fundamentally sound, it is difficult to implement because it requires either estimating or measuring the amount of airflow inducted into the engine. The maximum EGR is typically limited by exhaust smoke, or more precisely, exhaust particulate emissions. Because of this limitation, many systems increase the amount of EGR until the measured air/fuel ratio reaches a predetermined amount that decreases the oxides of nitrogen as much as possible while limiting the smoke emissions to some predetermined satisfactory maximum.

US—A—4,333,440 describes an apparatus for controlling EGR in a diesel engine without resort to a measurement of the induced airflow or the air/fuel ratio. That system utilizes measurements of the speed and the fuel delivery quantities of a fuel injection pump for identifying and retrieving EGR control values stored in a memory as functions of the pump speed and fuel quantity values. The retrieved EGR values are utilized to control the EGR valve. Such a system, however, makes no provision for directly controlling the level of particulates emitted by the engine, which level may vary as a function of factors other than pump speed and fuel quantity. For instance, fuel quality, engine operating temperature, ambient air pressure and engine wear may cause variations in the level of particulate contained in the exhaust gas emissions for constant conditions of fuel pump speed and injection quantity.

US—A—3,744,461 discloses a method and means for reducing exhaust smoke in I.C. engines by using a sensor in the exhaust stream to determine the smoke level and regulate the maximum fuel quantity stop on a fuel pump.

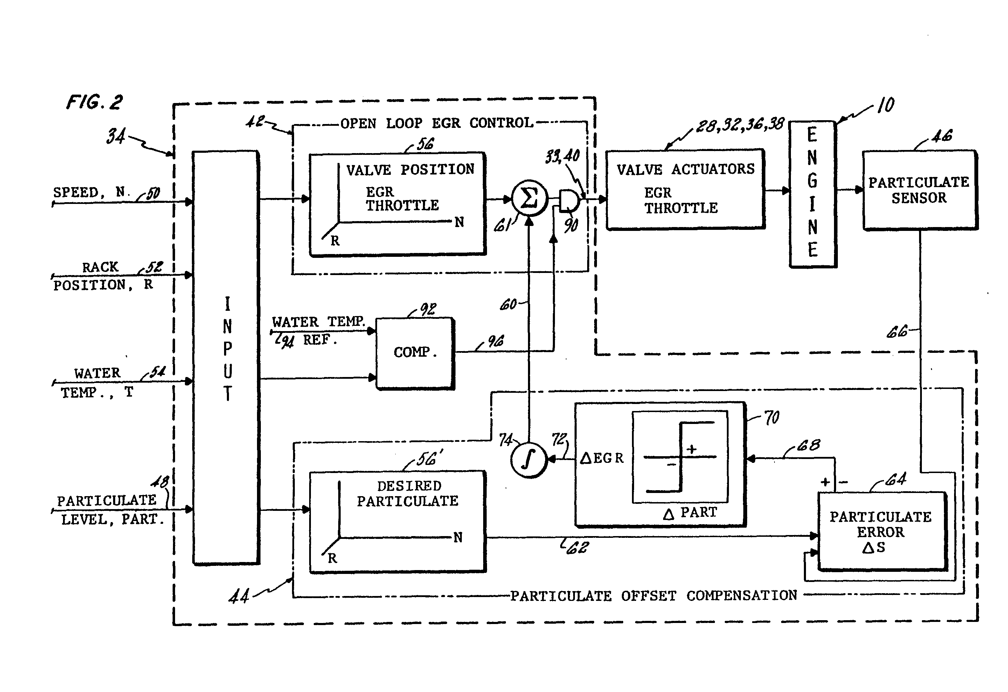

US—A—4,186,701 discloses an EGR control arrangement for maintaining an adequate balance between the suppression of $NO_x$ emission and the preservation of stable engine operation in a spark ignition engine. This balance is provided by monitoring the condition of combustion in the engine and developing therefrom a feedback signal for controlling the volume of recirculated exhaust gas. The feedback signal is provided by a probe which applies a voltage across a combustion chamber of the engine and uses the resulting ionic current as an indication of the combustion conditions. Specifically, the ionic current decreases as the amount of the retained combustion gas increases. The drawback to this approach as an EGR control resides in the fact that the probe measures combustion chamber conditions and not exhaust gas emissions. Reduction of $NO_x$ requires relatively high levels of recirculated exhaust gas yet reference to Figure 2 of the Suzuki patent clearly reveals that the probe signal is of least sensitivity in that region.

Therefore it is a principal object of the present invention to provide improved apparatus for controlling the recirculation of exhaust gas in a diesel engine. Specifically, it is desired to provide such control at least partly as a function of the level of particulates in the engine's exhaust gas stream.

It is a further object of the invention to provide an EGR system which provides improved control, through use of a feedback sensor which measures exhaust gas emissions directly.

In accordance with the present invention, there is provided a method and apparatus for controlling the recirculation of exhaust gas in a diesel engine having an exhaust gas recirculation duct connected between an exhaust duct from the engine and the air intake duct to the engine. An EGR valve operatively associated with the recirculation duct is responsive to an EGR control signal for relatively opening and closing the recirculation duct to the passage of exhaust gas therethrough. A sensor is mounted in operative association with the exhaust gas stream passing through the exhaust duct for providing a signal indicative of the level of particulates in the exhaust gas stream. Control circuitry responsive to various signals indicative of engine operating conditions, including the signal indicative of exhaust gas particulate level, provides an EGR control signal for regulating the EGR valve at least partly as a function of the sensed level of particulates in the exhaust gas stream. The engine operating condition signals to which the control circuitry responds typically are indicative of the speed of the engine or fuel injection pump, the engine load, and engine operating temperature. The particulate level signal is preferably provided by electrostatically sensing the passage of packets of charged particles by an electrically-passive, annular electrode positioned in or adjacent to the exhaust gas stream.

The control circuitry includes a memory for storing open loop EGR valve control signals as a function of speed and load. Additional memory means store particulate objective signals also as a function of speed and load. The sensed exhaust gas particulate level is compared with the appropriate particulate objective signal for the development of an error signal, which error signal is then used in an adaptive manner to adjust the open loop EGR control signal in a direction to diminish the particulate error signal. Such adaptive control of the EGR control signal as a function of the ehxaust gas particulate level is further advantageous because a predeterminable relationship exists bewteen exhaust particulate levels and $NO_x$ levels as a function of percent EGR. For depressed engine temperatures, as at start, provision is made for inhibiting EGR control.

The invention will now be described by way of example with reference to the accompanying drawings, wherein:

Figure 1 is a diagrammatic representation of an exhaust gas recirculation system in accordance with the present invention;

Figure 2 is a schematical block diagram of the control for the actuators of the present EGR system;

Figure 3 is illustrative of the form of one particulate sensor useful in conjunction with the present control system;

Figure 4 is a graphical illustration of the schedule of percent EGR as a function of load for a representative diesel engine; and

Figure 5 is a graphical representation of the exhaust particulate and the exhaust $NO_x$ level, each as a function of percent EGR.

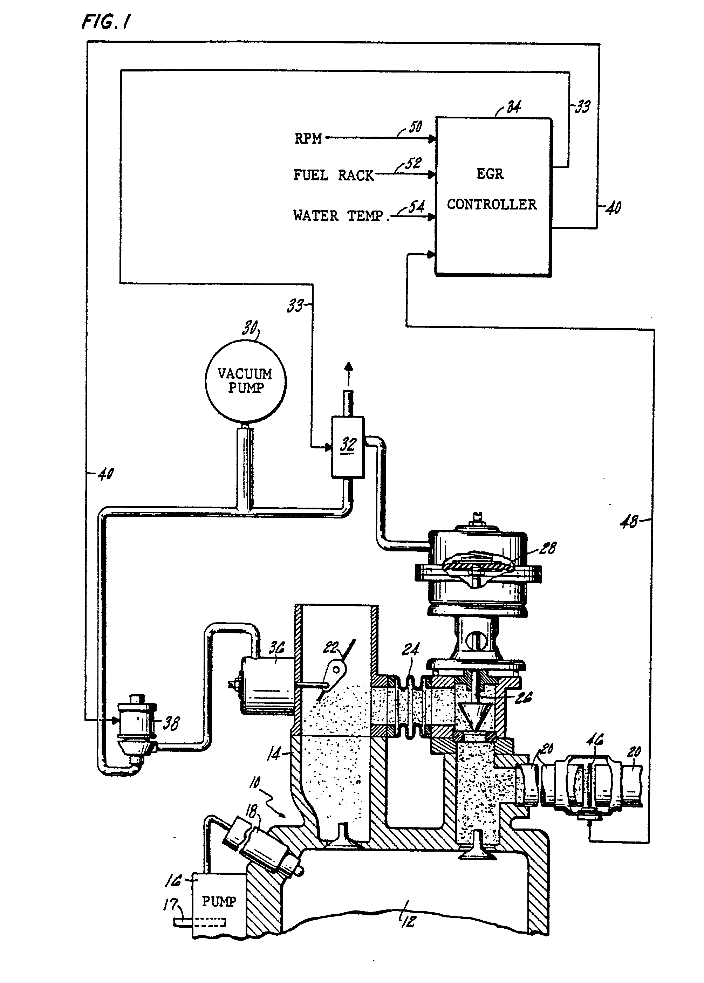

Referring to Figure 1 there is illustrated an EGR control system used with an internal combustion engine, particularly a compression ignition or diesel engine 10, only one combustion chamber 12 of which is illustrated herein. In a known manner air is inducted through the intake manifold 14 for combustion within chamber 12 upon the timed injection thereinto of fuel by means of injection pump 16 and a respective injector 18. The pump 16 includes a movable fuel quantity adjusting device, such as rack 17. Subsequently the combustion gases are exhausted from engine 10 via exhaust duct 20. It will be understood that engine 10 is typically a multi-cylinder engine, and an intake manifold and an exhaust manifold each common to the several cylinders are provided. A two-position, normally open, throttle 22 is positioned in the air intake duct 14 for reducing the inlet manifold air pressure, thereby enhancing induction of recirculated exhaust gases.

As is known, an EGR duct 24 extends from the exhaust manifold or duct 20 to the intake duct or manifold 14 just downstream of the throttle 22. An EGR valve 26 is operatively positioned in a known manner in the EGR duct 24 to selectively and finely control the amount of exhaust gas recirculated to the intake duct 14. The positioning of the EGR valve 26 may be effected by any of several suitable actuators, a vacuum-operated actuator 28 being illustrated in the present embodiment. An engine-driven vacuum pump 30 supplies a source of predetermined vacuum which vacuum is modulated by a duty cycle modulated solenoid valve 32 for utilization in controlling the actuator 28 of EGR valve 26. The solenoid valve 32 is controlled by an EGR control signal 33 applied thereto via line 33 from the electronic control 34. Additionally, the intake throttle 22 is controlled by a pneumatic actuator 36 to which a control vacuum pressure is applied via a throttle flap electrovalve 38. Modulation of the electrovalve 38 is provided by a control signal extended thereto on line 40 from the controller 34. Actuator 36 responds to the control signal on line 40 to move the throttle 22 to either one of two positions, normally fully open or partially closed. On the other hand, the modulated solenoid valve 32 associated with the actuator 28 for EGR valve 26 may be controlled by the signal on line 33 in a manner affording positioning of the EGR valve in a continuous manner between a fully open and fully closed limit.

Beyond the traditional function of an EGR control system to restrict the $NO_x$ level in the exhaust gases, the control system of the present invention optimizes the use of EGR at various operating conditions so as to also maintain the level of particulates emitted in the exhaust gas within prescribed limits. In accordance with the present invention and referring additionally to Figure 2, the electronic controller 34 is suitably provided by a microprocessor or microcomputer including appropriate input and output signal conditioning circuitry and appropriate signal storage capacity. Referring to Figure 2, the controller 34 specifically includes an open loop control, represented by block diagram 42, and an adaptive correction loop 44 to provide offset compensation to the primary control of open loop 42 as a function of the measured level of particulate emissions in the engine exhaust gas stream. In this latter respect, a suitable particulate sensor 46 is mounted in operative association with the exhaust gas stream in exhaust duct 20 for providing an electrical signal representative of the level of particulates being emitted by the engine.

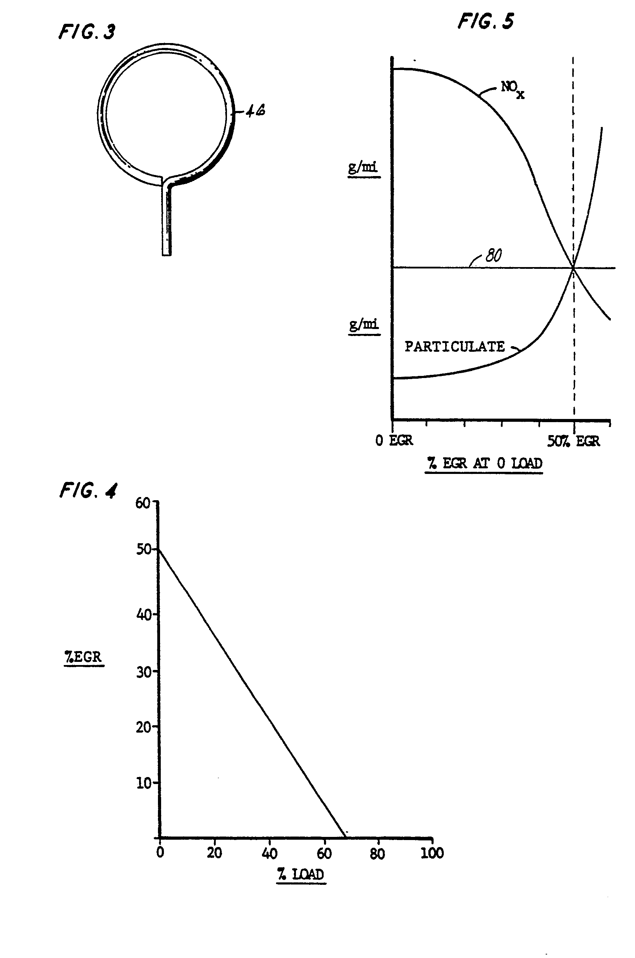

Referring to Figure 3, there is illustrated one preferred arrangement of an exhaust gas particulate sensor 46. A detailed explanation of this particulate sensor may be found in U.S. Application Serial No. (Case EP-1569) entitled Method and Apparatus for Indicating an Operating Characteristic of an Internal Combustion Engine by Bullis et al which application was filed on even date and is commonly owned herewith and is incorporated herein by reference. Briefly, the particulate sensor 46 is an annular electrode which is preferably electrically passive and is positioned such that most or all of the exhaust gas stream flows concentrically therethrough and therepast. Operation of sensor 46 is based on the principle that the particulates in the exhaust gas stream are electrically charged, and a measurement of this charge passage provides a measurement of the particulate level in the gas stream. More specifically, the charged particles in the exhaust gas stream are grouped in packets as a result of the successive discrete combustion events occurring in the engine, and the pulsating signal current induced in the particulate sensor 46 is quantitatively indicative of the charged particles in a packet and of the timing of the passage of the packet. The discrete signal pulsations associated with the passage of each packet are time-averaged, by suitable circuitry not shown, to provide a signal which is directly representative of the average level of particulates in the exhaust gas stream at the moment. Typically the current induced in the sensor 46 by the passage of the particulate packets is extended via line 48 to suitable signal development and input circuitry associated with the controller 34, though that signal development circuitry might alternately be located in proximity with the sensor. Although the sensor configuration illustrated in Figure 3 is preferred, it will be understood that other types and forms of exahust gas particulate sensors may be suitably employed to provide the particulate level signal to the controller 34. A root mean square averaging of the pulsating signal induced by the passage of respective particulate packets provides a substantially linear indication of the particulate level in the exhaust gas stream.

In addition to the particulate level signal appearing as an input to the controller 34 on lead 48, several other engine operating condition signals are also provided as inputs. Specifically, a signal indicative of the rpm or speed of the engine 10 or pump 16 is provided on input lead 50 and a signal indicative of the position of the injection pump rack, and thus the engine load, appears as an input on lead 52. The rpm signal on lead 50 is provided by a suitable transducer, such as a magnetic pick-up (not shown) mounted to sense the rotational speed of either the engine or the pump, as by counting the teeth on the flywheel or a toothed gear. The fuel rack position signal on lead 52 is provided by a position transducer (not shown) operatively associated with the injection pump fuel rack 17 or associated linkage, or is derived from knowledge of the position of a stepper-motor (not shown), to provide a signal which is directly indicative of the quantity of fuel injected by pump 16. The fuel rack 17 is typically controlled by a lever or the like in accordance with load or the desired torque. A further signal appearing on lead 54 as an input to the EGR control 34 provides a measure of engine temperature. More specifically, a temperature sensor (not shown) associated with the engine cooling water circuit provides a signal which substantially corresponds to the engine temperature.

The primary or open loop EGR control signal provided by the block 42 of controller 34 is obtained from a set of predetermined stored values of the EGR control signal. A number of EGR valve position control signals are stored at predetermined addresses in a read-only memory (ROM) 56 as a function of the engine operating conditions of speed, N, and load as represented by the rack position, R. Stated another way, for each of a plurality of engine speed and load conditions, there is stored in ROM 56 a respective EGR valve position control signal. The values of those EGR valve control signals are predetermined for storage in ROM 56 in an empirical manner by mapping the performance of a representative engine. The EGR valve control values will be selected such that, as a function of engine speed and load, the $NO_x$ emission are maintained within predetermined limits.

The EGR control signal provided on line 33 from controller 34 may be of either analog or digital form and is formatted such that its duty cycle varies directly with the value of the EGR control signal. In this way, the solenoid valve 32 is duty cycle modulated to apply a continuously variable vacuum to the EGR valve actuator 28.

As illustrated in the block diagram of Figure 2, the ROM 56 is also provided with a map of throttle position control values, also as a function of engine speed and load. Similarly, those throttle control values may be predetermined in an empirical manner and stored in the ROM. Each throttle control value is one of only two possible values, i.e. fully open or partially closed. Generally speaking, the fully open values are associated with a range of relatively low EGR control values and the partially closed throttle values are associated with the range of relatively higher EGR control values. The two-position throttle valve 22 provides the course level of control of the pressure difference between the exhaust and intake manifolds that are required to ensure that a wide range of EGR flow rates (e.g. up to 50%) can be achieved at any speed/load operating condition. Under either low-range EGR operation (throttle valve 22 full open) or high-range EGR operation (throttle valve 22 partially closed), fine control of the EGR flow rate is provided by the modulated EGR valve 26. The electrovalve 38 for throttle 22 is either energized or de-energized by the control signal applied on load 40 such that the throttle is either at its partially closed or full open position respectively.

In accordance with the invention the primary EGR control signal provided by the open loop control 42 is subject to offset compensation as a function of the sensed level of particulate emissions in the exhaust gas stream. Such compensation is provided via an adaptive feedback or correction loop 44 which compares the actual particulate level determined by particulate sensor 46 with a predetermined desired particulate level for the existing conditions of engine speed and load and utilizes any difference therebetween for providing a compensation signal 60 which is summed with the primary EGR control signal by summer 61 to provide the final or corrected EGR control signal for output from controller 34. As in the case of the stored values of the EGR control signals, a map of predetermined desired particulate level signals is stored in ROM 56' as a function of engine speed and load. The particulate level values stored in ROM 56' are also determined empirically by performance mapping a representative engine at different conditions of speed, load and EGR conditions and within predetermined $NO_x$ emissions limits, as will be discussed hereinafter with reference to Figures 4 and 5.

For each operating condition of engine speed and load, a value of desired particulate level is retrievable from ROM 56' and is extended, as represented by line 62, to an input of comparator 64, the other input to which is the actual particulate level signal provided by sensor 46 on line 66. The output of comparator 64 is represented by lead 68 and comprises an error signal having a positive or negative sense, depending upon whether the actual particulate level was above or below the desired level for the particular engine operating conditions. A standardized error signal of positive or negative sense is provided in a known manner as represented by the function block designated 70. The sampling frequency of the system is such that the standardized positive or negative error signals appearing on lead 72 may then be integrated, as represented by integrator 74, to provide the EGR compensating signal 60. The EGR compensating signal 60 is then summed with the primary EGR signal at summer 61 to provide the adjusted EGR control signal which, following appropriate output conditioning, appears on line 33 extended to the EGR valve actuators.

The sense and magnitude of the correction signal 60 developed from the particulate error signal 68 is such that the resulting control of the EGR valve 26 is in a direction which acts toward minimizing or nulling the error signal appearing on output 68 from comparator 64. Because an integrator 74 is used, the compensating signal 60 will typically assume some near-steady state value which typically will be other than zero, as the error signal 68 from comparator 64 approaches a null. Moreover, because of the "bang-bang" function of block 70 in providing incremental, standardized error signals, some small, tolerable amount of hunting or overshoot of the correction loop is to be expected. It will be appreciated that the integration and summing referred to herein will typically be performed digitally.

In determining the EGR control values to be stored in ROM 56, values are selected which will maximize, over a driving cycle, fuel economy (MPG) while meeting the emissions constraints on $NO_x$, unburned hydrocarbons, carbon monoxide and particulates. It should be understood, however, that various strategies may be employed to meet the $NO_x$ constrains while selectively minimizing particulate emissions at critical operating conditions, such as idle. It is normally always an objective to minimize the total amount of EGR utilized, in order to minimize particulate emissions. Moreover, as illustrated in the graph of Figure 4, the percent EGR Schedule for a particular engine as a function of load is seen to be substantially linear decreasing function. In other words, maximum EGR is required at zero load conditions and EGR decreases substantially linearly as load increases. Further, referring to Figure 5, the oppositely-directed functions of $NO_x$ and particulate levels, each as a function of percent EGR at zero load, are illustrated. It will be noted that $NO_x$ levels decrease with increasing EGR and conversely, particulate-levels increase with increasing EGR. Although the scale indicating the units of particulate and $NO_x$ levels differ in the graphical illustration, a limit line 80 has been illustrated therein to identify a common level of maximum acceptable $NO_x$ and particulate at zero load. It will be noted that for the particular engine, 50% EGR at no load permits both requirements to be satisfied. Moreover, although not illustrated, both the carbon monoxide and unburned hydrocarbon emissions are within their respective limits. Fuel economy begins to suffer somewhat above about 40% EGR. Moreover, it will be noted that at various given engine operating conditions, the relationship between exhaust particulate level and $NO_x$ emissions is known. Thus, in accordance with the invention, by determining the particulate level it is then possible to achieve a desired $NO_x$ level by controlling to an acceptable particulate level which corresponds with that $NO_x$ level.

Briefly, the primary EGR control signal from open loop 42 is effective for obtaining a level of EGR in accordance with a predetermined map which is intended to optimize engine performance as regards the aforementioned combined emissions characteristics and fuel economy; however, the feedback control provided by the particulate offset compensation of loop 44 further acts to insure that the exhaust particulate level is maintained substantially at that dictated by the map of desired particulate level stored in ROM 56'.

Provision is also made for preventing any EGR until the engine temperature as represented by the water temperature signal 54, exceeds some minimum threshold, for instance 65°C. The adjusted EGR control signal is extended to the duty-cycle modulated valve 32 via enabling gate 90 within controller 34. The water temperature signal 54 at the input of controller 34 is extended therewithin to a comparator 92 at which it is compared with a reference signal 94 indicative of a predetermined threshold temperature. When the actual water temperature exceeds the threshold temperature, comparator 92 outputs a logic signal level which is extended via lead 96 to the control input of gate 90 to enable the gate to pass the adjusted EGR signal. When the water temperature is below the threshold, the gage 90 effectively blocks or inhibits output of the EGR signal to the valve 32, and the EGR valve is maintained closed by virtue of the particular nonvarying signal or logic state appearing at the output of gate 90.

**Claims**

1. Method for controlling the recirculation of exhaust gas in a compression ignition engine (10) having an exhaust gas recirculation duct (24) connected between an exhaust duct (20) from the engine and the air intake duct (14) to the engine and valve means (26) operatively associated with the recirculation duct and responsive to an exhaust recirculation control signal (33), for relatively opening and closing said recirculation duct (24) to the passage of exhaust gas therethrough, and wherein fuel is supplied to the engine by a fuel injection pump (16) having a movable quantity adjusting device, comprising the steps of:

providing signals indicative of engine operating conditions including a signal indicative of the position of said pump quantity adjusting device and thereby engine load and a signal indicative of the rpm of the engine or pump, characterized by

sensing the particulates in the exhaust gas stream passing through the exhaust gas duct from the engine and providing an output signal indicative of the particulate level; and

generating an exhaust recirculation control signal in rsponse to said signals and to said particulate level signal.

2. The method of claim 1 wherein said step of generating said exhaust recirculation control signal comprises:

providing a preliminary exhaust recirculation control signal in response to and as a function of said signals;

providing a desired particulate level setpoint signal;

comparing said output signal indicative of the sensed level of particulates with said desired particulate level setpoint signal to provide an error signal as a function of a difference therebetween; and

adjusting said preliminary exhaust recirculation signal as a function of said error signal to provide said exhaust recirculation signal, said adjusting of said preliminary exhaust recirculation signal being toward minimizing said error signal.

3. Apparatus for controlling the recirculation of exhaust gas in a compression ignition engine (10) according to the method of claim 1, said ignition engine (10) having an exhaust gas recirculation duct (24) connected between an exhaust duct (20) from the engine and the air intake duct (14) to the engine and valve means (26) operatively associated with the recirculation duct (24) and responsive to an exhaust recirculation control signal (33) for relatively opening and closing said recirculation duct (24) to the passage of exhaust gas therethrough, said apparatus comprising control signal generating means (34) responsive to engine operating condition signals and generating said exhaust recirculation control signal, said apparatus being characterized by means (46) adapted to be mounted in operative association with the exhaust gas stream passing through the exhaust duct (20) from the engine for sensing the level of particulates in the exhaust gas stream and providing an output signal indicative thereof; and in that said control signal generating means (34) is also responsive to said particulate level signal for providing said exhaust recirculation control signal, said exhaust recirculation control signal thereby being operative to regulate said recirculation duct valve means at least partly as a function of the sensed level of particulates in the exhaust gas stream.

4. The apparatus of claim 3, including means for sensing certain engine operating conditions other than said exhaust gas particulate level and providing signals (50, 52, 54) indicative of said conditions and wherein said control signal generating means (34) includes:

first means (42, 56) for generating a preliminary exhaust recirculation control signal in response to and as a function of said certain engine operating condition signals;

second means (56) for generating a desired particulate level setpoint signal (62);

means (64) for comparing said sensed particulate level signal (66) with said particulate level setpoint signal (62) and providing an error signal (68) as a function of a difference therebetween; and

compensating means (74, 61) responsive to said error signal (68) for providing adjustment of said preliminary exhaust recirculation control signal thereby to provide said exhaust recirculation control signal, said adjustment of said preliminary exhaust recirculation control signal by said compensating means being toward minimizing said error signal.

5. The apparatus of claim 3 or 4 wherein the particulates in the exhaust gas stream at a sensing station downstream of the engine are electrically charged and of like polarity and said particulate level sensing means comprises a probe for electrostatically sensing the charged particles appearing at the sensing station and providing an electrical signal quantitatively indicative thereof.

6. The apparatus of claim 3 or 4 wherein the particulates in the exhaust gas stream at a sensing station downstream of the engine are electrically charged and of like polarity and said particulate level sensing means comprises an annular probe which is so sized and electrically connected as to allow passage of the charged particles therethrough in substantially noncontacting manner, a pulsating signal being induced in the probe by the passage of the charged particles, thereby sensing the charged particulates appearing at the sensed station and providing an electrical signal quantitatively indicative thereof.

7. The apparatus of claim 6 wherein the periodicity of the combustion and valving in the engine results in the charged particles in the exhaust gas stream being grouped in packets associated with respective combustion events, the axial length of the probe being substantially less than the spacing between successive charged particle packets and wherein the induced signal substantially corresponds to the passage of respective charged particle packets and provides the quantitative indication of particulate in the exhaust gas stream.

8. The apparatus of any one of the claims 3 to 7 wherein fuel is supplied to the engine by a fuel injection pump (16) having a movable quantity adjusting device and said certain engine operating condition signals include one signal (52) indicative of the position of said pump quantity adjusting device and thereby engine load and another signal (50) indicative of the rpm of the engine or pump.

9. The apparatus of claim 8 wherein said means (42, 56) for generating said preliminary exhaust recirculation control signal and said means (56') for generating said desired particulate level setpoint signal comprise memory means having values of said preliminary exhaust recirculation control signal and values of said desired particulate levels stored therein, each as a function of both said pump quantity adjusting device position and the rpm of the pump or engine.

10. The apparatus of claim 9 wherein said values of said desired particulate levels stored in said memory means are preselected to correspond with particular acceptable levels of nitrous oxide emissions for the respective said conditions of pump quantity adjusting device position and engine or pump speed.

11. The apparatus of claim 9 or 10 wherein said engine includes a throttle (22) in the intake duct (14) thereof and throttle actuating means (36, 38) responsive to a throttle control signal (40) for relatively opening and closing said throttle, and wherein said memory means additionally stores values of said throttle control signal (40) for selection and utilization to control actuation of said throttle as a function of both said pump quantity adjusting device position and the rpm of the pump or engine.

12. The apparatus of any one of the claims 3 to 11 wherein said certain engine operating signals further include a signal (54) indicative of the temperature of the engine, and said control signal generating means (34) further includes circuit means (90, 92) for inhibiting said exhaust recirculation control signal whenever said engine temperature signal (94) is less than a predetermined threshold value (94).

## Patentansprüche

1. Verfahren zum Steuern der Rückführung von Abgas in einem Dieselmotor (10), der einen Abgasrückführkanal (24) hat, welcher zwischen einen Auspuffkanal (20) des Motors und den Luftansaugkanal (14) des Motors geschaltet und mit einer Ventileinrichtung (26) versehen ist, die auf ein Abgasrückführsteuersignal (33) hin den Rückführkanal (24) für den Durchtritt von Abgas relativ öffnet und schließt, wobei Kraftstoff dem Motor durch eine Kraftstoffeinspritzpumpe (16) zugeführt wird, die eine bewegliche Mengeneinstellvorrichtung hat, beinhaltend folgende Schritte: Liefern von Signalen, die Motorbetriebsbedingungen angeben, einschließlich eines Signals, das die Position der Mengeneinstellvorrichtung der Kraftstoffeinspritzpumpe und dadurch die Motorbelastung angibt, sowie eines Signals, das die Drehzahl des Motors oder der Pumpe angibt, gekennzeichnet durch

Abfühlen der Feststoffe in dem Abgasstrom, der durch den Auspuffkanal des Motors hindurchgeht, und Liefern eines Ausgangssignals, das den Feststoffgehalt angibt; und

Erzeugen eines Abgasrückführsteuersignals auf diese Signale und auf das Feststoffgehaltsignal hin.

2. Verfahren nach Anspruch 1, wobei der Schritt des Erzeugens des Abgasrückführsteuersignals beinhaltet:

Liefern eines vorläufigen Abgasrückführsteuersignals auf die Signale hin und als Funktion derselben;

Liefern eines Feststoffgehaltsollwertsignals;

Vergleichen des Ausgangssignals, das den abgefühlten Gehalt an Feststoffen angibt, mit dem Feststoffgehaltsollwertsignal, um ein Fehlersignal als Funktion einer Differenz zwischen denselben zu liefern; und

Einstellen des vorläufigen Abgasrückführsignals als Funktion des Fehlersignals, um das Abgasrückführsignal zu liefern, wobei das Einstellen des vorläufigen Abgasrückführsignals in Richtung einer Minimierung des Fehlersignals erfolgt.

3. Vorrichtung zum Steuern der Rückführung von Abgas in einem Dieselmotor (10) gemäß dem Verfahren nach Anspruch 1, wobei der Dieselmotor (10) einen Abgasrückführkanal (24) hat, der zwischen einen Auspuffkanal (20) des Motors und den Luftansaugkanal (14) des Motors geschaltet und mit einer Ventileinrichtung (26) versehen ist, die auf ein Abgasrückführsteuersignal (33) hin den Rückführkanal (24) für den Durchtritt von Abgas relativ öffnet und schließt, wobei die Vorrichtung eine Steuersignalerzeugungseinrichtung (34) aufweist, die auf die Motorbetriebsbedingungssignale anspricht und das Abgasrückführsteuersignal erzeugt, wobei die Vorrichtung gekennzeichnet ist durch eine Einrichtung (46), die in betriebsmäßiger Zuordnung zu dem Abgasstrom befestigbar ist, welcher durch den Auspuffkanal (20) des Motors hindurchgeht, um den Gehalt an Feststoffen in dem Abgasstrom abzufühlen und ein diesen Gehalt angebendes Ausgangssignal zu liefern; wobei die Steuersignalerzeugungseinrichtung (34) außerdem auf das Feststoffgehaltsignal anspricht, um das Abgasrückführsteuersignal zu liefern, so daß das Abgasrückführsteuersignal die Rückführkanalventileinrichtung wenigstens teilweise als Funktion des abgefühlten Gehalts an Feststoffen in dem Abgasstrom einstellt.

4. Vorrichtung nach Anspruch 3, beinhaltend eine Einrichtung zum Abfühlen von gewissen Motorbetriebsbedingungen, bei denen es sich nicht um den Abgasfeststoffgehalt handelt, und zum Liefern von Signalen (50, 52, 54), welche die Bedingungen angeben, wobei die Steuersignalerzeugungseinrichtung (34) aufweist:

eine erste Einrichtung (42, 56) zum Erzeugen eines vorläufigen Abgasrückführsteuersignals auf die gewissen Motorbetriebsbedingungssignale hin und als Funktion derselben;

eine zweite Einrichtung (56) zum Erzeugen eines Feststoffgehaltsollwertsignals (62);

eine Einrichtung (64) zum Vergleichen des abgefühlten Feststoffgehaltsignals (66) mit dem Feststoffgehaltsollwertsignal (62) und zum Liefern eines Fehlersignals (68) als Funktion einer Differenz zwischen denselben; und

eine Kompensationseinrichtung (74; 61), die auf das Fehlersignal (68) hin das vorläufige Abgasrückführsteuersignal einstellt, um dadurch das Abgasrückführsteuersignal zu liefern, wobei die Einstellung des vorläufigen Abgasrückführsteuersignals durch die Kompensationseinrichtung in Richtung auf eine Minimierung des Fehlersignals erfolgt.

5. Vorrichtung nach Anspruch 3 oder 4, wobei die Feststoffe in dem Abgasstrom in einer Abfühlstation stromabwärts des Motors elektrisch geladen sind und die gleiche Polarität haben und wobei die Feststoffgehaltabfühleinrichtung eine Meßsonde hat zum elektrostatischen Abfühlen der geladenen Teilchen, die in der Abfühlstation erscheinen, und zum Liefern eines elektrischen Signals, das sie quantitativ angibt.

6. Vorrichtung nach Anspruch 3 oder 4, wobei die Feststoffe in dem Abgasstrom in einer Abfühlstation stromabwärts des Motors elektrisch geladen sind und die gleiche Polarität haben und wobei die Feststoffgehaltabfühleinrichtung eine ringförmige Meßsonde aufweist, die so bemessen und elektrisch angeschlossen ist, daß sie den Durchtritt der geladenen Teilchen im wesentlichen berührungsfrei gestattet, wobei ein pulsierendes Signal in der Meßsonde durch den Durchtritt der geladenen Teilchen induziert wird und dadurch die geladenen Feststoffe abgefühlt werden, die in der abgefühlten Station erscheinen, und ein elektrisches Signal geliefert wird, das diese quantitativ angibt.

7. Vorrichtung nach Anspruch 6, wobei die Periodizität der Verbrennung und der Ventilbetätigung in dem Motor dazu führt, daß die geladenen Teilchen in dem Abgasstrom in Paketen zusammengefaßt sind, welche den Verbrennungsereignissen zugeordnet sind, wobei die axiale Länge der Meßsonde wesentliche kleiner ist als der Abstand zwischen aufeinanderfolgenden Paketen gelandener Teilchen und wobei das induzierte Signal dem Vorbeigang von Paketen geladener Teilchen im wesentlichen entspricht und die quantitative Angabe von Feststoffen in dem Abgasstrom liefert.

8. Vorrichtung nach einem der Ansprüche 3 bis 7, wobei der Kraftstoff dem Motor durch eine Brennstoffeinspritzpumpe (16) geliefert wird, die eine bewegliche Mengeneinstellvorrichtung hat, und wobei die gewissen Motorbetriebszustandssignale ein Signal (52) beinhalten, das die Position der Mengeneinstellvorrichtung der Einspritzpumpe und dadurch die Motorbelastung angibt, und ein weiteres Signal (50), das die Drehzahl des Motors oder der Pumpe angibt.

9. Vorrichtung nach Anspruch 8, wobei die Einrichtung (42, 56) zum Erzeugen des vorläufigen Abgasrückführsteuersignals und die Einrichtung (56') zum Erzeugen des Feststoffgehaltsollwertsignals eine Speichereinrichtung beinhalten, in der die Werte des vorläufigen Abgasrückführsteuersignals und die Werte der gewünschten Feststoffgehalte gespeichert sind, und zwar jeweils als Funktion sowohl der Position der Mengeneinstellvorrichtung der Einspritzpumpe als auch der Drehzahl der Pumpe oder des Motors.

10. Vorrichtung nach Anspruch 9, wobei die Werte der Sollfeststoffgehalte, die in der Speichereinrichtung gespeichert sind, so vorgewählt werden, daß sie besonderen zulässigen Gehalten an Stickoxidemissionen für die Bedingungen der Position der Mengeneinstellvorrichtung der Einspritzpumpe und der Motor- oder Pumpendrehzahl entsprechen.

11. Vorrichtung nach Anspruch 9 oder 10, wobei der Motor eine Drosselklappe (22) in seinem Ansaugkanal (14) und eine Drosselklappenbetätigungseinrichtung (36, 38) aufweist, welche auf ein Drosselklappensteuersignal (40) hin die Drosselklappe relativ öffnet und schließt, und wobei die Speichereinrichtung zusätzlich Werte des Drosselklappensteuersignals (40) zur Auswahl und zur Benutzung speichert, um die Betätigung der Drosselklappe als Funktion sowohl der Position der Mengeneinstellvorrichtung der Einspritzpumpe als auch der Drehzahl der Pumpe oder des Motors zu steuern.

12. Vorrichtung nach einem der Ansprüche 3 bis 11, dadurch gekennzeichnet, daß die gewissen Motorbetriebssignale weiter ein Signal (54) beinhalten, das die Temperatur des Motors angibt, und daß die Steuersignalerzeugungseinrichtung (34) weiter eine Schaltungseinrichtung (90, 92) enthält zum Blockieren des Abgasrückführsteuersignals immer dann, wenn das Motortemperatursignal (94) kleiner als ein vorbestimmter Schwellenwert (94) ist.

**Revendications**

1. Procédé de commande du recyclage des gaz d'échappement dans un moteur diesel (10) comportant un conduit (24) de recyclage des gaz d'échappement, branché entre une tubulure d'échappement (20) partant du moteur et le conduit (14) d'admission d'air dans le moteur, et une vanne (26) associée fonctionnellement au conduit de recyclage et répondant à un signal (33) de commande du recyclage des gaz d'échappement, afin d'ouvrir et fermer relativement le conduit de recyclage (24) à l'égard du passage des gaz d'échappement à travers lui, du carburant étant fourni au moteur par une pompe d'injection de carburant (16) comportant un dispositif de réglage de quantité mobile, comprenant les étapes consistant à fournir des signaux représentant des conditions de fonctionnement du moteur lesquels comprennent un signal indiquant la position du dispositif de réglage de la quantité de carburant de la pompe et par conséquent la charge du moteur et un signal indiquant la vitesse de rotation du moteur ou de la pompe, caractérisé en ce qu'on détecte les particules dans le courant de gaz d'échappement passant à travers la tubulure d'échappement partant du moteur et on délivre un signal de sortie indiquant la teneur en particules, et on produit un signal de commande de recyclage des gaz d'échappement en réponse à ces signaux et au signal de teneur en particules.

2. Procédé suivant la revendication 1 caractérisé en ce que l'étape de production du signal de commande de recyclage des gaz d'échappement consiste à fournir un signal de commande de recyclage des gaz d'échappement préliminaire en réponse à ces signaux et en fonction de ceux-ci, à fournir un signal de point de réglage de la teneur en particules désirée, à comparer le signal de sortie représentant la teneur en particules détectée avec le signal de point de réglage de la teneur en particules désirée, afin de fournir un signal d'erreur en fonction d'une différence entre ces signaux, et à ajuster le signal de commande de recyclage des gaz d'échappement préliminaire en fonction de ce signal d'erreur, afin de fournir le signal de commande de recyclage des gaz d'échappement, l'ajustement du signal de commande de recyclage des gaz d'échappement préliminaire tendant à réduire au minimum le signal d'erreur.

3. Appareil de commande du recyclage des gaz d'échappement dans un moteur diesel (10) suivant le procédé de la revendication 1, ce moteur diesel (10) comportant un conduit (24) de recyclage des gaz d'échappement, branché entre une tubulure d'échappement (20) partant du moteur et le conduit (14) d'admission d'air dans le moteur, et une vanne (26) associée fonctionellement au conduit de recyclage (24) et répondant à un signal (33) de commande du recyclage des gaz d'échappement, afin d'ouvrir et fermer relativement le conduit de recyclage (24) à l'égard du passage des gaz d'échappement à travers lui, cet appareil comprenant un générateur de signaux de commande (34) répondant à des signaux de conditions de fonctionnement du moteur et produisant le signal de commande de recyclage des gaz d'échappement, cet appareil étant caractérisé par des moyens (46) adaptés de manière à être montés en association opérationnelle avec le courant de gaz d'échappement passant à travers la tubulure d'échappement (20) partant du moteur, afin de détecter la teneur en particules dans le courant de gaz d'échappement et de délivrer un signal de sortie représentant cette teneur, et en ce que le générateur de signaux de commande (34) répond également au signal de teneur en particules afin de fournir le signal de commande de recyclage des gaz d'échappement, ce signal de commande de recyclage des gaz d'échappement intervenant alors pour régler la vanne du conduit de recyclage au moins partiellement en fonction de la teneur en particules détectée dans le courant de gaz d'échappement.

4. Appareil suivant la revendication 3 caractérisé en ce qu'il comporte des moyens pour détecter certaines conditions de fonctionnement du moteur autres que la teneur en particules des gaz d'échappement et pour délivrer des signaux (50, 52, 54) représentant ces conditions, et le générateur de signaux de commande (34) comporte des premiers moyens (42, 56) pour produire un signal de commande de recyclage des gaz d'échappement préliminaire en réponse à certain signaux de conditions de fonctionnement du moteur et en fonction de ceux-ci, des seconds moyens (56) pour fournir un signal de point de réglage de teneur en particules désirée (62), des moyens (64) pour comparer le signal de teneur en particules détectée (66) avec le signal de point de réglage de teneur en particules (62) et pour fournir un signal d'erreur (68) en fonction d'une différence entre les précédents signaux, et des moyens de compensation (74, 61) répondant au signal d'erreur (68) en assurant l'ajustement du signal de commande de recyclage des gaz d'échappement préliminaire de manière à délivrer le signal de commande de recyclage des gaz d'échappement, cet adjustement du signal de commande du recyclage des gaz d'échappement préliminaire par les moyens de compensation s'effectuant dans le sens tendant à une réduction du signal d'erreur à un minimum.

5. Appareil suivant l'une quelconque des revendications 3 ou 4, caractérisé en ce que les particules présente dans le courant de gaz d'échappement, à l'endroit d'un poste de détection situé en avan du moteur, sont chargées électriquement avec la même polarité et les moyens de détections de la teneur en particules comprennent une sonde pour détecter électrostatiquement les particules chargées apparaissant au poste de détection et pour fournir un signal électrique indiquant la quantité de ces particules.

6. Appareil suivant l'une quelconque des revendications 3 ou 4, caractérisé en ce que les particules présente dans le courant de gaz d'échappement, à l'endroit d'un poste de détection situé en aval du moteur, sont chargées électriquement avec la même polarité et les moyens de détections de la teneur en particules comprennent une sonde annulaire qui est dimensionnée et connectée électriquement de manière à permettre le passage des particules chargées à travers elle, pratiquement sans contact, un signal impulsionnel étant induit dans la sonde par le passage des particules chargées, de manière à détecter les particules chargées apparaissant au poste de détections et à fournir un signal électrique indiquant la quantité de ces particules chargées.

7. Appareil suivant la revendication 6 caractérisé en ce que la périodicité de la combustion et du fonctionnement de la vanne dans le moteur se traduit par le fait que les particules chargées présentes dans le courant de gaz d'échappement se trouvant être groupées en paquets associés aux phases de combustion respectives, la longueur axiale de la sonde étant notablement inférieure à l'espacement entre les paquets de particules chargées successifs et le signal induit correspond sensiblement au passage des paquets de particules chargées respectifs et il fournit l'indication quantitative des particules dans le courant de gaz d'échappement.

8. Appareil suivant l'une quelconque des revendications 3 à 7 caractérisé en ce que le carburant est fourni au moteur par une pompe d'injection de carburant (16) comportant un dispositif de réglage de quantité mobile et certains des signaux des conditions de fonctionnement du moteur comprennent un signal (52) représentant la position du dispositif de réglage de quantité de la pompe et par conséquent la charge du moteur, et un autre signal (50) représentant la vitesse de rotation du moteur ou de la pompe.

9. Appareil suivant la revendication 8 caractérisé en ce que les moyens (42, 56) pour produire le signal de commande de recyclage des gaz d'échappement préliminaire et les moyens (56') pour produire le signal de point de réglage de la teneur en particules désirée comprennent des moyens à mémoire dans lesquels sont stockées des valeurs du signal de commande de recyclage des gaz d'échappement préliminaire et des valeurs des teneurs en particules désirées, chacune de ces valeurs étant fonction à la fois de la position du dispositif de réglage de quantité de la pompe et de la vitesse de rotation de la pompe ou du moteur.

10. Appareil suivant la revendication 9 caractérisé en ce que les valeurs des teneurs en particules désirées qui sont stockées dans ces moyens à mémoire, sont présélectionnées de manière à correspondre à des teneurs en particules ou des émissions d'oxyde nitreux acceptables pour les conditions respectives de la position du dispositif de réglage de quantité de la pompe et de la vitesse du moteur ou de la pompe.

11. Appareil suivant l'une quelconque des revendications 9 ou 10, caractérisé en ce que le moteur comporte un papillon (22) dans le conduit d'admission (14) et des moyens (36, 38) d'actionnement du papillon lesquels répondent à un signal de commande du papillon (40) pour ouvrir et fermer relativement ce papillon, et les moyens à mémoire stockent additionnellement des valeurs du signal de commande du papillon (40) pour la sélection et l'utilisation, en vue de la commande de l'actionnement du papillon en fonction à la fois de la position du dispositif de réglage de quantité de la pompe et de la vitesse de rotation de la pompe ou du moteur.

12. Appareil suivant l'une quelconque des revendications 3 à 11, caractérisé en ce que certain signaux de conditions de fonctionnement du moteur comportent en outre un signal (54) représentant la température du moteur et le générateur de signaux de commande (34) comporte en outre un circuit (90, 92) pour empêcher l'émission du signal de commande de recyclage des gaz d'échappement chaque fois que le signal de température du moteur (94) est inférieur à une valeur de seuil prédéterminée (94).

0 105 828

FIG.1

RPM —— 50

FUEL RACK —— 52

WATER TEMP. —— 54

EGR
CONTROLLER

34

33

40

33

30

VACUUM
PUMP

32

40

28

36

22

24

26

38

14

48

46

20

20

10

18

16

17

PUMP

12

1

FIG. 2

FIG. 3

46

FIG. 5

g/mi

NO$_x$

80

g/mi

PARTICULATE

0 EGR

50% EGR

% EGR AT 0 LOAD

FIG. 4

60

50

40

%EGR

30

20

10

0    20    40    60    80    100

% LOAD